# EUROPEAN PATENT APPLICATION

(11) **EP 2 824 964 A1**
(43) Date of publication of application: **14.01.2015**
(21) Application number: 12873824.2
(22) Date of filing: 06.04.2012
(51) Int. Cl.: H04W 28/08

(54) **LOAD CONTROL METHOD FOR WIRELESS COMMUNICATION SYSTEM AND WIRELESS COMMUNICATION SYSTEM**

(71) Applicant: Huawei Technologies Co., Ltd, Shenzhen, Guangdong 518129 (CN)
(72) Inventor: LI, Zhiming, Shenzhen Guangdong 518129 (CN); WU, Xiaobo, Shenzhen Guangdong 518129 (CN); LIU, Jixing, Shenzhen Guangdong 518129 (CN)
(74) Representative: Pfenning, Meinig & Partner GbR
(86) International application number: PCT/CN2012/073600
(87) International publication number: WO 2013/149401

(57) **Abstract**

Embodiments of the present invention provide a load control method and device for a wireless communication system. The method includes: when a load of a first communication system is higher than a set threshold value, the first communication system sends an overload notification message to a second communication system (21); the second communication system stops sending a message to the first communication system or sends a message of a specific priority and/or a specific type to the first communication system according to indication information in the overload notification message (22). By adopting the embodiments of the present invention, when the first communication system is overloaded, the second communication system stops sending the message to the first communication system or sends the message of the specific priority and/or the specific type to the first communication system according to the indication information in the overload notification message. Thus, the load of the first communication system is reduced by decreasing the message sent to the first communication system.

## Description

### TECHNICAL FIELD

The present invention relates to a wireless communication technology field, and particularly, to a load control method and device for a wireless communication system.

### BACKGROUND

To deal with a challenge of a wireless broadband technology and maintain a leading edge of a 3GPP (The 3rd Generation Partnership Project, the 3rd generation partnership project) network, 3GPP established an LTE (Long Term Evolution, long term evolution) at the end of 2004. A new mobile communication network architecture is defined under the guidance of the LTE, and the architecture only reserves a PS (Packet Switched, packet switched) domain, so the architecture is called as an EPS (Evolved Packet System, evolved packet system) or an SAE (System Architecture Evolution, system architecture evolution).

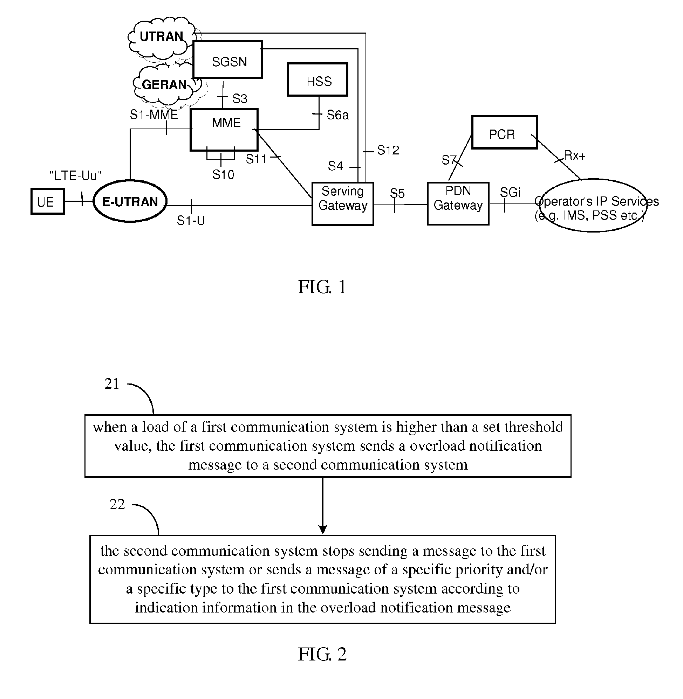

An architecture diagram of an LTE system is shown in Fig. 1. An E-UTRAN is an evolved eNB (base station), and is responsible for modulation and demodulation of data. A serving gateway (Serving Gateway) and a PDN gateway (Public Data Network Gateway) are evolved gateways, and are responsible for forwarding a data packet. An MME (Mobility Management Entity, mobility management entity) is a signaling control entity of an evolved system, and is responsible for functions of authentication, mobility management and the like. An evolved network does not provide a voice function of traditional circuit switch, and only provides a high rate data bearing service.

In the LTE system, voice service data are generally controlled by an IMS (IP Multimedia Subsystem, IP multimedia subsystem), so in the SAE/LTE a voice service is generally called as a VoIP voice service. A traditional voice service is generally borne on a network based on circuit switch. Deployment of the LTE in an initial phase is hotspot coverage, but a network providing a circuit domain voice service, for example, a GSM (Global System of Mobile communication, global system of mobile communication)/ a UMTS (Universal Mobile Telecommunications System, universal mobile telecommunications system) or a CDMA (Code Division Multiple Access, code division multiple access) 2000 1x (first generation mobile communication system for short) may be regarded as a full coverage to some extent. In an early deployment phase of the LTE, the IMS may not be deployed, and a high rate data service is mainly provided. Accordingly, a mechanism falling back to a CS (Circuit Switch, circuit switch) domain from the LTE system to support a voice call is needed. Nowadays, many operators of a 1x network desire that the network is gradually transited to the LTE system and a service of the CS domain may be transferred to a terminal when the terminal is served in the LTE network. When a terminal with a CS fallback (CSFB, CS fallback) capability connects the E-UTRAN, the terminal may be pre-registered in a 1x circuit domain, so as to access and establish a voice call in the CS domain through a 1x system.

With applications of smart phones and a lot of M2M (Machine to Machine, machine to machine) based on an SMS (Short Message Service, short message service), signaling congestion of a wireless network becomes a very crucial problem. A mechanism is needed to reduce the congestion, namely when user signaling and the SMS borne by a control plane reach a capacity threshold of a control plane system, the network may selectively discard the SMS or discard some unessential SMS to ensure a success rate of user signaling transmission. Or when a priority of some SMS is very high, the network may discard or delay transmission of some unessential user signaling. In consideration that the present operators simultaneously own the LTE and the CDMA networks or the LTE and the UMTS/GSM networks, it is needed to simultaneously consider two or more access networks, rather than merely the LTE network for the signaling congestion.

Taking the signaling congestion under CDMA-LTE network intercommunication as an example, when a load of the MME in the LTE network is very heavy or a load of the eNB is very heavy, the CDMA network still has a large quantity of SMS (for M2M application) being sent to a UE; because the UE currently resides in the LTE system, according to the present CDMA1x-LTE intercommunication architecture and solution, a 1x CS IWS can not know the current load condition of the MME and/or the eNB and continuously sends a 1x SMS message to the MME through an S102 interface; and because the MME does not analyze a 1x air interface message packaged by the S102 interface, and can not determine packaged contents of the 1x air interface message, it can not select and discard certain 1x air interface signaling. Similarly, after the MME forwards the 1x air interface signaling to the E-UTRAN, the E-UTRAN can not differently treat the 1x air interface signaling. For the same reason, when a 1x network is congested, the current MME can not determine whether the 1x network is congested, and still sends a 1x message to a 1x system through the IWS, thus further increasing the congestion of the 1x system.

A method for performing load control between the CDMA2000 network and the LTE network in the prior art includes: two cells, namely "activity type (Activity Type)" and "activity priority (Activity Priority)", are carried in an A21-1x Air Interface Signaling message used for packaging a CDMA2000 air interface message. The above-mentioned "activity type" may be used for distinguishing a short message or a voice call, and the above-mentioned "activity priority" is extended to an IWS to MME direction and used for indicating the priority of the packaged 1x message. The MME determines how to process the 1x air interface message transmitted by the 1xCS IWS according to "activity type" and "activity priority" information.

The above-mentioned method is a priority processing method of UE granularity. When the MME is in a congestion state, the MME receives the type and the priority of the 1x message from the IWS, and may determine how to process the 1x message according to this information, for example, to delay processing the 1x message or to discard the 1x message.

In the process of implementing the present invention, the inventor discovers that the method for performing load control between the CDMA2000 network and the LTE network in the prior art at least has the following problem: the method is based on the UE granularity, and the MME needs to identify the activity types and the activity priorities of all the 1x messages from the IWS, so that coupling degree of the LTE network and the CDMA network is increased. In consideration of mass deployment of LTE/CDMA 1x dual-mode smart phones, the MME needs additional process resources for analyzing and processing the 1x message, so that the processing complexity of the MME is increased.

If the MME has already been in a high load state, it still needs to continuously receive and process the message from the IWS, and the load of the MME is further increased.

### SUMMARY

Embodiments of the present invention provide a load control method and device for a wireless communication system, to realize effective control on a load of the wireless communication system.

A load control method for a wireless communication system includes:
sending, by a first communication system, when a load of the first communication system is higher than a set threshold value, a first load notification message to a second communication system, so that the second communication system stops sending a message to the first communication system or only sends a message of a specific priority and/or a specific type to the first communication system according to indication information in the first load notification message.

A load control method for a wireless communication system includes:
receiving, by a second communication system, a load notification message sent by a first communication system, wherein the load notification message is sent when a load of the first communication system is higher than a set threshold value;
stopping sending, by the second communication system, a message to the first communication system, or only sending a message of a specific priority and/or a specific type to the first communication system, according to indication information in the load notification message.

A wireless communication system includes:
a load notification message constructing module, configured to construct a first load notification message when a load of the communication system is higher than a set threshold value, wherein the load notification message carries indication information that it is stopped to send a message to the communication system or only a message of a specific priority and/or a specific type is sent to the communication system;
a load notification message sending module, configured to send the first load notification message to another communication system, so that the another communication system stops sending the message to the communication system or only sends the message of the specific priority and/or the specific type to the communication system according to the indication information in the load notification message.

A wireless communication system includes:
a load notification message receiving module, configured to receive a load notification message sent by another wireless communication system, wherein the load notification message is sent when a load of the another communication system is higher than a set threshold value;
a message sending control processing module, configured to stop sending a message to the another communication system or send a message of a specific priority and/or a specific type to the another communication system according to indication information in the load notification message received by the load notification message receiving module.

It can be seen from the technical solutions provided by the embodiments of the present invention that, in the embodiments of the present invention, the first communication system sends the load notification message to the second communication system, so that when the first communication system is overloaded, the second communication system stops sending the message to the first communication system or sends the message of the specific priority and/or the specific type to the first communication system according to the indication information in the load notification message. Thus, messages sent to the first communication system are decreased, the load of the first communication system is reduced, and the robustness of the first communication system is enhanced.

### BRIEF DESCRIPTION OF DRAWINGS

Fig. 1 is an architecture diagram of an LTE system in the prior art;
Fig. 2 is a specific processing flow diagram of a load control method for a wireless communication system provided by an embodiment of the present invention;
Fig. 3 is a schematic diagram of that an MME sends an OverloadStart message to a 1x CS IWS when a load of an LTE system is high;
Fig. 4 is a schematic diagram of that an MME sends an OverloadStop to a 1x CS IWS when a load of an LTE network is back to normal;
Fig. 5 is a schematic diagram of a network architecture of accessing to an EPC by a CDMA HRPD network provided by an embodiment of the present invention;
Fig. 6 is a specific structure diagram of a first wireless communication system provided by an embodiment of the present invention;
Fig. 7 is a specific structure diagram of a second wireless communication system provided by an embodiment of the present invention.

### DESCRIPTION OF EMBODIMENTS

Embodiments of the present invention will be illustrated in detail below with reference to the accompanying drawings.

### Embodiment

An embodiment provides a load control method for a wireless communication system, of which a specific processing flow is shown in Fig. 2, including the following processing steps.

Step 21, when a load of a first communication system is higher than a set threshold value, the first communication system sends a load notification message to a second communication system.

For example, if the first communication system is an LTE system and the second communication system is a wireless communication system based on a circuit domain, when the load of an MME or an E-UTRAN or an air interface in the LTE system is greater than the set threshold value, the MME in the LTE system sends the load notification message carrying congestion state information and congestion control information to a network interoperation entity in the wireless communication system based on the circuit domain, wherein the congestion state information is used for indicating that the LTE system is overloaded, and the congestion control information is used for indicating that it is stopped to send a message to the LTE system or used for indicating indication information that a message of a specific priority and/or a specific type is sent to the LTE system.

For another example, if the first communication system is a wireless communication system based on a circuit domain and the second communication system is an LTE system, when the load of the wireless communication system based on the circuit domain is greater than the set threshold value, a network interoperation entity in the wireless communication system based on the circuit domain sends the load notification message carrying congestion state information and congestion control information to an MME in the LTE system, wherein the congestion state information is used for indicating that the wireless communication system based on the circuit domain is overloaded, and the congestion control information is used for indicating that it is stopped to send a message to the wireless communication system based on the circuit domain or used for indicating that a message of a specific priority and/or a specific type is sent to the wireless communication system based on the circuit domain.

The above-mentioned wireless communication system based on the circuit domain may be a CDMA 2000 or a GSM/UMTS system, and the network interoperation entity in the wireless communication system based on the circuit domain may be a 1xCS IWS of the CDMA2000 system or an MSC (Mobile Switching Center, mobile switching center) of the GSM/UMTS system.

For another example, if the first communication system is an LTE system and the second communication system is a CDMA HRPD (evolved High Rate Packet Data, evolved high rate packet data) communication system, when the load of an MME or an E-UTRAN or an air interface in the LTE system is greater than the set threshold value, the MME in the LTE system sends the load notification message to an eAN (evolved access network) in the CDMA HRPD communication system, wherein the load notification message carries indication information that it is stopped to send a message to the LTE system or carries indication information that a message of a specific priority is sent to the LTE system.

For another example, if the first communication system is a CDMA HRPD communication system and the second communication system is an LTE system, when the load of the CDMA HRPD communication system is greater than the set threshold value, an eAN in the CDMA HRPD communication system sends the load notification message to an MME in the LTE system, wherein the load notification message carries indication information that it is stopped to send a message to the CDMA HRPD communication system or carries indication information that a message of a specific priority is sent to the CDMA HRPD communication system. The load notification message includes an existing message defined on a communication interface between the first communication system and the second communication system or a message added on a communication interface between the first communication system and the second communication system.

Step 22, the second communication system implements congestion control according to indication information in the load notification message. The congestion control may include stopping sending a message to the first communication system or sending a message of a specific priority and/or a specific type to the first communication system.

For example, if the first communication system is an LTE system and the second communication system is a wireless communication system based on a circuit domain, after a network interoperation entity in the wireless communication system based on the circuit domain receives the load notification message carrying congestion state information and congestion control information and sent by an MME in the LTE system, the wireless communication system based on the circuit domain determines that the LTE system is overloaded according to the congestion state information carried in the load notification message, and stops sending the message to the MME or only sends the message of the specific priority and/or the specific type to the MME according to the congestion control information in the load notification message.

For another example, if the first communication system is a wireless communication system based on a circuit domain and the second communication system is an LTE system, after an MME in the LTE system receives the load notification message carrying congestion state information and congestion control information and sent by a network interoperation entity in the wireless communication system based on the circuit domain, the MME in the LTE system determines that the wireless communication system based on the circuit domain is overloaded according to the congestion state information carried in the load notification message, and stops sending the message to the wireless communication system based on the circuit domain or only sends the message of the specific priority and/or the specific type to the wireless communication system based on the circuit domain according to the congestion control information in the load notification message.

The message of the specific type may include a message related to an SMS or a voice call or an emergency service or position registration. The message of the specific priority includes a message of which a priority value is higher than or equal to a set threshold, wherein the set threshold is set by an operator or a manufacturer by itself. The "priority" may indicate a priority of a user sending the message, or a priority of the message, or a priority of a call service or an SMS service corresponding to the message. For example, when the "priority" indicates the priority of the user, the "message of the specific priority" includes a message sent by a user of which a priority value is higher than or equal to a set threshold, wherein the set threshold is set by the operator or the manufacturer by itself.

For another example, if the first communication system is an LTE system and the second communication system is a CDMA HRPD communication system, an eAN in the CDMA HRPD communication system receives the load notification message sent by an MME in the LTE system, wherein the load notification message carries indication information that it is stopped to send the message to the LTE system or carries indication information that the message of the specific priority is sent to the LTE system; and the eAN stops sending the message to the MME or sends the message of the specific priority to the LTE system according to the indication information carried in the load notification message.

For another example, if the first communication system is a CDMA HRPD communication system and the second communication system is an LTE system, an MME in the LTE system receives the load notification message sent by an eAN in the CDMA HRPD communication system, wherein the load notification message carries indication information that it is stopped to send the message to the CDMA HRPD communication system or carries indication information that only the message of the specific priority is sent to the CDMA HRPD communication system; and the MME stops sending the message to the eAN or sends the message of the specific priority to the eAN according to the indication information carried in the load notification message.

Further, when the load of the first communication system is lower than the set threshold value, the first communication system sends another load notification message carrying congestion state information and congestion control information to the network interoperation entity in the wireless communication system based on the circuit domain, wherein the congestion state information indicates that overload of the first communication system is back to normal, and the congestion control information indicates that the message is normally sent to the first communication system.

After the second communication system receives the another load notification message, the second communication system removes the congestion control on the first communication system, and normally sends the message to the first communication system.

In the embodiment of the present invention, the first communication system sends the load notification message to the second communication system, so that when the first communication system is overloaded, the second communication system stops sending the message to the first communication system or only sends the message of the specific priority and/or the specific type to the first communication system according to the indication information in the load notification message. Because messages sent to the first communication system are decreased, the load of the first communication system is reduced.

### Embodiment

The first communication system is an LTE system, the second communication system is a CDMA 2000 1x system, and a network load of the LTE system is higher than the set threshold value., It may be caused by a high load of an MME or an E-UTRAN or an air interface that the network load of the LTE system is higher than the set threshold value. The load includes an uplink or a downlink load, and reasons causing the high load are diverse and include but are not limited to the following aspects: insufficient processing resources, insufficient transmission resources, insufficient air interface resources, congestion of a control plane, or congestion of a user plane.

The MME of the LTE system sends a load notification message to a 1xCS IWS in the CDMA 2000 system through an S102 interface. The load notification message may be an added A21-Overload Notification (overload notification) message or an extended A21-Event Notification (event notification) message or an extended other A21 message or a new message defined on an interface, which is newly defined, used for transmitting an A21-overload notification message. An additional event information field is added in a certain cell (such as Event info cell) parameter of the added A21-Overload Notification message or in a certain cell (such as A21 Event cell) parameter of the extended A21-Event Notification message. Different values of the additional event information field express that the first communication system is overloaded and it is needed to stop sending the message to the first communication system; or, different values of the additional event information field express indication information that the first communication system is overloaded and it is only needed to send the message of the specific priority and/or the specific type to the first communication system; or, different values of the additional event information field express that the first communication system is not overloaded.

After the 1xCS IWS receives the above-mentioned overload message, the 1xCS IWS acquires overload information of the LTE network and performs corresponding processing, and the corresponding processing includes:
the 1xCS IWS stops sending any 1x message to the MME; or,
the 1xCS IWS only sends a 1x message of a specific priority and/or a specific type to the MME, for example, only sends a 1x message related to voice and stops sending 1x short message signaling, or only sends a 1x message related to an emergency service and stops sending a 1x message related to a common service, or only sends a 1x message of a VIP user and stops sending a 1x message of a low priority user, or only sends a 1x message having a priority higher than a certain priority threshold, wherein the priority threshold is set by an operator or a manufacturer by itself, or the priority threshold is informed to the 1xCS IWS by the MME. The 1xCS IWS may acquire the priority of the user by querying an AN-AAA (Access Network-AAA (Authentication, Authorization and Accounting)) or an HLR.

The congestion control of the embodiment of the present invention is performed according to the load condition of a network element.
1, the above-mentioned load notification message may be an extended A21-Event Notification message, and after the 1x CS IWS receives the extended A21-Event Notification message, the 1x CS IWS may send an A21-ACK message to the MME for acknowledging that the extended A21-Event Notification message is successfully received.

An additional event information field may be added in a certain cell (such as A21 Event cell) parameter of the extended A21-Event Notification message, and after the second communication system determines that the first communication system is overloaded according to different values of the additional event information field, the second communication system stops sending the message to the first communication system; or, after the second communication system determines that the first communication system overloaded according to different values of the additional event information field, the second communication system sends indication information of a message of a specific priority and/or a specific type to the first communication system; or, the second communication system determines that the first communication system is not overloaded according to different values of the additional event information field.

Cell parameters of the above-mentioned extended A21-Event Notification message are shown in Table 1 below.

**Table 1 Cell Parameters of Extended A21-Event Notification Message**

| Cell Parameters |
|---|
| A21 Message Type |
| Correlation ID |
| Mobile Identity (MN ID) |
| A21 Event |

A21 Message Type (message type) expresses a type of an A21 message. For example, when a value of the A21 Message Type is 4, it expresses an event notification. Correlation ID (correlation ID) is used for message matching.

Mobile Identity (MN ID) (mobile identity) expresses all users if all are set as 0.

A21 Event (A21 event) is used for indicating an event happening.

An Additional Event Info (additional event information) field is added in the A21 Event cell parameter in the embodiment of the present invention, and an extended A21 Event cell parameter is shown in Table 2 below.

**Table 2 A21 Event Cell Parameter**

| 7 | 6 | 5 | 4 | 3 | 2 | 1 | 0 |
|---|---|---|---|---|---|---|---|
| A21 Element Identifier = [09H] | | | | | | | |
| Length | | | | | | | |
| Event | | | | | | | |
| (High Bit) | Additional Event Info | | | | | | |
| ... | | | | | | | |
| | | | | | | | (Low Bit) |

Event: a value included in this field is used for indicating an event happening, and an added value expresses overload. Meanings of values of this field are shown in Table 3 below.

**Table 3 Event Values**

| **Hexadecimal Value** | Event **Meaning** |
|---|---|
| 03H | UE Power Down/Connection Closed |
| 04H | Handoff Rejected |
| 0BH | S102 Redirection |
| 00-06H | Reserved |
| 07H | AllowedForwardLinkMess ages Attribute Value |
| 0CH | Overload |
| All Other Values | Reserved |

When the value of the event is 0CH, it is expressed that the LTE system is in a high load state.

Additional Event Info: an additional event information field, an information cell format of this field and meanings of values being shown in Table 4 below.

**Table 4 Additional Event Info Values**

| 7 | 6 | 5 | 4 | 3 | 2 | 1 | 0 |
|---|---|---|---|---|---|---|---|
| Start/Stop | SMS | Voice | Non-e mergency | Priority incl | Priority | | |

On the premise that the value of the Event is 0CH, the value meaning of each field in the above-mentioned Additional Event Info is as follows.

Start/Stop (start/stop): expresses high load when set as 1, and expresses that it is back to normal when set as 0. When this field is 0, a sender (MME herein) sets all subsequent fields as 0, and a receiver (1x CS IWS herein) should ignore the subsequent fields.

SMS (short message): expresses that it is stopped to send a message related to a short message when set as 1; and expresses that a message related to a short message may be sent when set as 0.

Voice (voice): expresses that it is stopped to send a message related to voice when set as 1; and expresses that a message related to voice may be sent when set as 0. Non-emergency service (non-emergency service): expresses that it is stopped to send messages related to all non-emergency services when set as 1; and expresses that messages related to all services may be sent when set as 0.

Priority incl (priority included), expresses that a priority field is included when set as 1, and expresses that a priority field is not included when set as 0.

Priority, a priority threshold value, expresses that it is stopped to send a message having a priority lower than the priority threshold, and expresses that it is stopped to send all messages when set as 000.

After the 1x CS IWS receives the above-mentioned extended A21-Event Notification message, the 1x CS IWS adopts different operations respectively according to different values of Event and Additional Event Info in the extended A21-Event Notification message. The adopted different operations may include: stopping sending any 1x message to the MME; or, only sending a 1x message related to a short message; or, only sending a 1x message related to a voice call; or, only sending a 1x messages related to an emergency service; or, only sending a 1x message having a priority higher than a certain priority threshold; or, only sending a 1x message having a priority higher than a certain priority threshold and related to a voice call; or, only sending a 1x message having a priority higher than a certain priority threshold and related to a short message; or, only sending a 1x message having a priority higher than a certain priority threshold and related to an emergency service.

For example, when the value of Event is 0CH, the value of the Start/Stop field in Additional Event Info is 1, the value of the SMS field is 1, the value of Voice is 0, the value of the Non-emergency field is 0 and the value of the Priority incl field is 0, the 1x CS IWS only sends the 1x message related to the voice to the MME.

For another example, when the value of Event is 0CH, the value of the Start/Stop field in Additional Event Info is 1, the value of the SMS field is 1, the value of Voice is 0, the value of the Non-emergency field is 0 and the value of the Priority incl field is 1, the 1x CS IWS only sends the 1x message related to the voice call and having a priority higher than a threshold value defined in the Priority field to the MME. 2, the above-mentioned load notification message may be an added A21-Overload Notification message, and information cells included in this message are shown in Table 5 below.

**Table 5 A21-Overload Notification information Cell**

| **Information Cells** |
|---|
| A21 Message Type |
| Correlation ID |
| Event info |

The A21 message type is defined as a new value 0DH, and the definition of the Event Info field is similar to that of the Additional Event Info in Table 4 and is not described redundantly herein.

When the LTE is in a high load, the MME sends the A21-Overload Notification message to the 1x CS IWS, and the 1x CS IWS adopts different operations respectively according to different values of the Event info field in the received A21-Overload Notification message, wherein the different operations may include: stopping sending any 1x message to the MME; or, only sending a 1x message related to a short message; or, only sending a 1x message related to a voice call; or, only sending a 1x message related to an emergency service; or, only sending a 1x message having a priority higher than a certain priority threshold; or, only sending a 1x message having a priority higher than a certain priority threshold and related to a voice call; or, only sending a 1x message having a priority higher than a certain priority threshold and related to a short message; or, only sending a 1x message having a priority higher than a certain priority threshold and related to an emergency service.

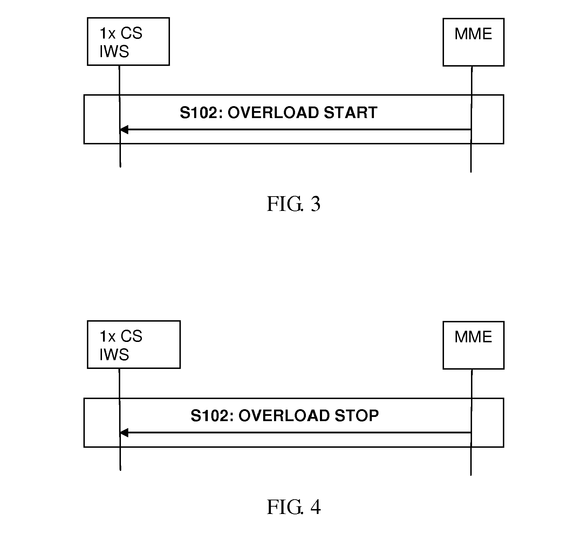

In practical application, high load start and stop may also be expressed by **A21-Overload** Start and **A21-Overload** Stop respectively. As shown in Fig. 3, when the load of the LTE system is high, the MME sends an A21-Overload Start message to the 1x CS IWS. As shown in Fig. 4, when the load of the LTE network is back to normal, the MME sends an A21-Overload Stop message to the 1x CS IWS.

In the embodiment of the present invention, when the load of the LTE system is very heavy, the LTE system actively informs the load state of the LTE system to the 1xCS IWS, and requests the 1xCS IWS to stop or decrease the message sent to the LTE system, so as to reduce the load of the LTE system. When the load of the 1x system is heavy, the 1x system may inform the load information of the 1x system to the LTE system, so that the LTE system stops or decreases the information sent to the 1x system.

### Embodiment

The 1xCS IWS may send a notification message to another 1x network node, and inform processing operation after the 1xCS IWS receives the above-mentioned load notification message to the another 1x network node, so that the another 1x network node adopts corresponding processing operation. The above-mentioned notification message is a 1x message sent between the MME and the IWS through the A21 interface. Definition of the 1x message herein may be referred to 3GPP2 A.S0014. The 1x message may bear a message related to a 1x SMS or a 1x call/registration.

For example, when the above-mentioned another 1x network node is an MSC (the MSC expresses an MSC based on a circuit domain or an MSCe based on a packet domain), an Overload Notification message on an A1/A1p interface (an interface between the MSC and a BSC) may be added, and the message is a BSMAP (Base Station Management Application Part, base station management application part) message and includes the following fields shown in Table 6.

**Table 6 A21-Overload Notification information Cell**

| Message Type |
|---|
| Load Info |

A value of the Message Type field is a new value 70H, and a format and a value of the Load Info field are shown in Table 4 above. By sending the above-mentioned Overload Notification message to the MSC, the 1xCS IWS informs the processing operation after the 1xCS IWS receives the above-mentioned load notification message to the MSC.

When the 1xCS IWS stops sending a 1x message of a SMS type to the MME, the 1xCS IWS extends a value of an existing IE "Cause" and adds a new value "overload" in ADDS Page Ack or ADDS Transfer Ack of an A1/A1p message. By sending the ADDS Page Ack or the ADDS Transfer Ack to the MSC, the 1xCS IWS informs the MSC that the 1xCS IWS no longer sends the 1x SMS to the UE residing in the LTE system due to overload of the LTE system.

When the 1xCS IWS stops sending a 1x message having a priority lower than a certain priority threshold to the MME, the 1xCS IWS extends a value of an existing IE "Cause" and adds a new value "overload" in an Assignment Failure or Handoff Failure message of an A1/A1p message. By sending the Assignment Failure or Handoff Failure message to the MSC, the 1xCS IWS informs the MSC that the 1xCS IWS no longer sends the 1x message to the UE residing in the LTE system due to overload of the LTE system. Based on this, priority threshold information may be simultaneously added in the message, so that the MSC determines whether to send the 1x message to the 1xCS IWS subsequently according to the priority threshold information.

When the 1xCS IWS only sends a 1x message related to an emergency service to the MME, the 1xCS IWS extends a value of an existing IE "Cause" and adds a new value "overload, emergency service only" in an Assignment Failure or Handoff Failure message of an A1/A1p message. By sending the Assignment Failure or Handoff Failure message to the MSC, the 1xCS IWS informs the MSC that the 1xCS IWS sends the 1x message to the UE residing in the LTE system only when the UE has the emergency service needing to be initiated due to overload of the LTE system.

When the congestion of the MME or the LTE system is eliminated and the 1xCS IWS receives a notification message about congestion elimination from the MME, an overload IE is added or an existing IE is extended in the A1/A1p message in a BS to MSC direction. By sending the A1/A1p message to the MSC, the 1xCS IWS informs the MSC that the congestion of the MME or the LTE system has been eliminated and the MSC may send the 1x message to the UE residing in the LTE system.

The embodiment of the present invention is simultaneously suitable for congestion control of the LTE and the UMTS/GSM systems. An SGs interface between the MME and an MSC Server supports congestion control signaling, and an S3 interface between the MME and an SGSN supports congestion control signaling.

In the embodiment of the present invention, the 1xCS IWS may send the notification message to another 1x network node, and informs the processing operation after the 1xCS IWS receives the above-mentioned load notification message to the another 1x network node, so that the another 1x network node adopts the corresponding processing operation.

### Embodiment

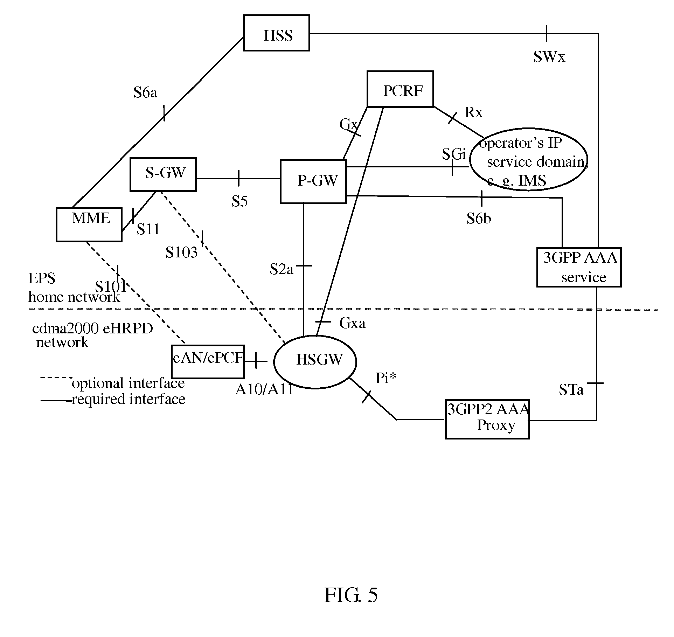

3GPP and 3GPP2 also define an intercommunication standard of packet data services of an LTE network and a CDMA HRPD (evolved High Rate Packet Data, evolved high rate packet data) network, and support accessing to an EPC and switching data services of the CDMA HRPD network. A schematic diagram of a network architecture of the access of the CDMA HRPD network to the EPC is shown in Fig. 5, wherein HSGW and eAN/ePCF are upgraded original CDMA HRPD network entities.

To support the access of CDMA 2000 eHRPD, added functions of the EPC network entity include MME, S-GW, P-GW and PCRF. In the architecture shown in Fig. 5, the S101 interface is an interface for pre-registration and signaling handover between the MME and the eAN, and the MME may inform the load condition of the LTE network to the eAN through the S101 interface to realize load control under inter-system interoperation.

When the load of the MME or E-UTRAN or air interface in the LTE system is greater than a set threshold value, the MME in the LTE system sends a load notification message to the eAN in the CDMA HRPD communication system, wherein the load notification message carries indication information that it is stopped to send a message to the LTE system or a message of a specific priority is sent to the LTE system.

The S101 interface involves Notification Request (notification request) and Notification Response (notification response) messages for supporting interoperation of the MME and the eAN.

The Notification Request message should be sent to an opposite end by the MME or the eAN to inform a certain event or fact, and the Notification Response message should be sent to an opposite end eAN or MME by the MME or the eAN to respond to the Notification Request message.

The Notification Request message includes the following fields:
Session ID condition optional
Session ID2 condition optional
Handover Indicator condition optional
Recovery condition optional
Private Extension optional

In the embodiment of the present invention, the above-mentioned Notification Request message may be extended, and the extended Notification Request message is used as the load notification message. A Loadinfo field is added in the above-mentioned Notification Request message, and the format of the Loadinfo field is as follow:

| | **Bit** | | | | | | | |
|---|---|---|---|---|---|---|---|---|
| **Byte** | **8** | **7** | **6** | **5** | **4** | **3** | **2** | **1** |
| 1 | Type = 14 | | | | | | | |
| 2 to 3 | Length = 1 | | | | | | | |
| 4 | Spare | | | | Instance | | | |
| 5 | Load Info | | | | | | | |

Type (type)=14 expresses a load notification
Length (length field)=1
Spare (spare field) and Instance field are both set as 0
Values of the LoadInfo field are:

| **7** | **6** | **5** | **4** | **3** | **2** | **1** | **0** |
|---|---|---|---|---|---|---|---|
| Start/Stop | Reserve | | Priority incl | priority | | | |

Start/Stop (start/stop): expresses high load when set as 1, and expresses that it is back to normal when set as 0. When this field is 0, a sender sets all subsequent fields as 0, and a receiver should ignore the subsequent fields.

Priority incl (priority included), expresses that a priority field is included when set as 1, and expresses that a priority field is not included when set as 0.

Priority, a priority threshold value, expresses that it is stopped to send a message having a priority lower than the priority threshold, and expresses that it is stopped to send all messages when set as 000.

When the MME sends the above-mentioned extended Notification Request message to the eAN, the Start/Stop in the LoadInfo field is set as 1 and the value of the Priority incl is 0, the eAN stops sending a message to the MME according to the indication. Further, the eAN may instruct an HSGW not to send data by sending XOFF signaling to the HSGW.

If the Start/Stop in the LoadInfo field is set as 1 and the Priority incl is set as 1, the eAN only sends a message of which a priority is higher than a threshold value defined in the Priority field to the MME.

A trigger condition that the MME sends the Notification Request message to the eAN may be high load of the MME or the E-UTRAN. When the load of the MME is back to normal, the MME sends another Notification Request message to the eAN, wherein the Start/Stop in the LoadInfo field is set as 0. Then, messages are continuously and normally sent between the MME and the eAN.

In practical application, a new S101 message may also be defined to carry overload information. For example, a message type 8 is used to express the Overload Notification message, and a field of the new S101 message only needs the above-mentioned LoadInfo field.

### Embodiment

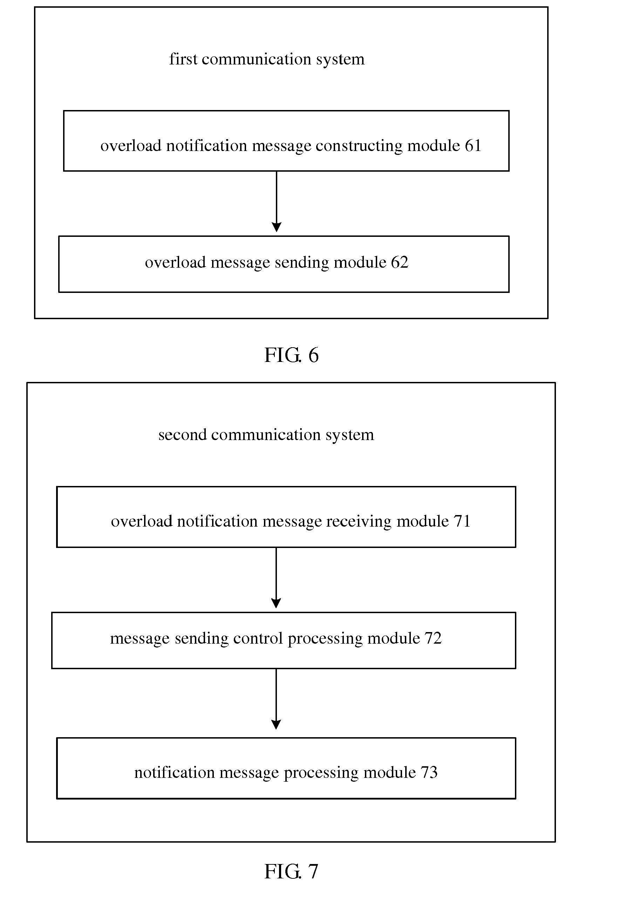

An embodiment provides a first wireless communication system, of which a specific result is shown in Fig. 6, including the following modules:
a load notification message constructing module 61, configured to construct a first load notification message when a load of the communication system is higher than a set threshold value, wherein the load notification message carries indication information that it is stopped to send a message to the communication system or only a message of a specific priority and/or a specific type is sent to the communication system;
a load notification message sending module 62, configured to send the first load notification message to another communication system, so that the another communication system stops sending the message to the communication system or only sends the message of the specific priority and/or the specific type to the communication system according to the indication information in the load notification message.

Specifically, if the communication system is an LTE system and the another communication system is a wireless communication system based on a circuit domain, the load notification message constructing module 61 is further configured to construct the first load notification message carrying first congestion state information and first congestion control information when the load of an MME or an E-UTRAN or an air interface in the LTE system is greater than the set threshold value, wherein the first congestion state information is used for indicating that the LTE system is overloaded, and the first congestion control information is used for indicating that it is stopped to send the message to the LTE system or that only the message of the specific priority is sent to the LTE system.

Further, the load notification message constructing module 61 is further configured to construct a second load notification message carrying second congestion state information and second congestion control information when the load of the LTE system is back to normal, wherein the second congestion state information indicates that the load of the LTE system is back to normal, and the second congestion control information indicates that the message is normally sent to the LTE system.

Further, the load notification message sending module 62 is further configured to send the second load notification message to a network interoperation entity in the wireless communication system based on the circuit domain through the MME in the LTE system.

Specifically, if the wireless communication system is a wireless communication system based on a circuit domain and the another wireless communication system is an LTE system, the load notification message constructing module 61 is further configured to construct the first load notification message carrying first congestion state information and first congestion control information when the load of the wireless communication system based on the circuit domain is greater than the set threshold value, wherein the first congestion state information indicates that the wireless communication system based on the circuit domain is overloaded, and the first congestion control information indicates that it is stopped to send the message to the wireless communication system based on the circuit domain or that the message of the specific priority is sent to the wireless communication system based on the circuit domain.

Specifically, the load notification message constructing module 61 is further configured to construct a second load notification message carrying second congestion state information and second congestion control information when the load of the wireless communication system based on the circuit domain is back to normal, wherein the second congestion state information indicates that the load of the wireless communication system based on the circuit domain is back to normal, and the second congestion control information indicates that the message is normally sent to the wireless communication system based on the circuit domain.

Specifically, the load notification message sending module 62 is further configured to send the second load notification message to an MME in the LTE system through a network interoperation entity in the wireless communication system based on the circuit domain.

Specifically, the load notification message constructing module 61 is further configured to add an additional event information field in an Event info cell parameter of an added A21-Overload Notification message or in an A21 Event cell parameter of an extended A21-Event Notification message when the wireless communication system based on the circuit domain is a CDMA2000 and the first load notification message is the added A21-Overload Notification message or the extended A21-Event Notification message; and
by different values of the additional event information field, express that the wireless communication system is overloaded and it is stopped to send the message to the wireless communication system; or, indication information that the wireless communication system is overloaded and the message of the specific priority and/or the specific type is sent to the wireless communication system; or, that the wireless communication system is not overloaded.

Specifically, if the wireless communication system is an LTE system and the another wireless communication system is a CDMA HRPD communication system, the load notification message constructing module 61 is further configured to construct a load notification message carrying congestion state information and congestion control information when the load of an MME or an E-UTRAN or an air interface in the LTE system is greater than the set threshold value, wherein the congestion state information indicates that the LTE system is overloaded, and the congestion control information indicates that it is stopped to send the message to the LTE system or that the message of the specific priority is sent to the LTE system; or,

if the wireless communication system is a CDMA HRPD communication system and the another wireless communication system is an LTE system, the load notification message constructing module is further configured to construct a load notification message carrying congestion state information and congestion control information when the load of the CDMA HRPD communication system is greater than the set threshold value, wherein the congestion state information indicates that the CDMA HRPD communication system is overloaded, and the congestion control information indicates that it is stopped to send the message to the CDMA HRPD communication system or that the message of the specific priority is sent to the CDMA HRPD communication system.

An embodiment also provides another wireless communication system, of which a specific structure is shown in Fig. 7, including the following modules:
a load notification message receiving module 71, configured to receive a load notification message sent by another wireless communication system, wherein the load notification message is sent when a load of the another communication system is higher than a set threshold value;
a message sending control processing module 72, configured to stop sending a message to the another communication system or send a message of a specific priority and/or a specific type to the another communication system according to indication information in the load notification message received by the load notification message receiving module.

Specifically, the load notification message receiving module 71 is further configured to, when the another wireless communication system is an LTE system and the communication system is a wireless communication system based on a circuit domain, receive the load notification message carrying congestion state information and congestion control information and sent by an MME in the LTE system through a network interoperation entity in the wireless communication system based on the circuit domain, wherein the congestion state information indicates that the LTE system is overloaded, and the congestion control information indicates that it is stopped to send the message to the LTE system or that the message of the specific priority is sent to the LTE system; or, the congestion state information indicates that the load of the LTE system is back to normal, and the congestion control information indicates that the message is normally sent to the LTE system; or,

when the another wireless communication system is a wireless communication system based on a circuit domain and the second communication system is an LTE system, receive the load notification message carrying congestion state information and congestion control information and sent by a network interoperation entity in the wireless communication system based on the circuit domain through an MME in the LTE system, wherein the congestion state information indicates that the wireless communication system based on the circuit domain is overloaded, and the congestion control information indicates that it is stopped to send the message to the wireless communication system based on the circuit domain or that the message of the specific priority is sent to the wireless communication system based on the circuit domain; or, the congestion state information indicates that the load of the wireless communication system based on the circuit domain is back to normal, and the congestion control information indicates that the message is normally sent to the wireless communication system based on the circuit domain.

Specifically, the message sending control processing module 72 is further configured to, when the wireless communication system based on the circuit domain is a CDMA2000, the load notification message is an added A21-Overload Notification message or an extended A21-Event Notification message and an additional event information field is added in an Event info cell parameter of the added A21-Overload Notification message or in an A21 Event cell parameter of the extended A21- Event Notification message,
according to different values of the additional event information field, determine that the another wireless communication system is overloaded, and stop sending the message to the another wireless communication system; or,
determine that the another wireless communication system is overloaded, and send indication information of the message of the specific priority and/or the specific type to the another wireless communication system; or,
determine that the another wireless communication system is not overloaded, and normally send the message to the another wireless communication system.

Specifically, the message sending control processing module 72 is further configured to, when the another wireless communication system is an LTE system and the communication system is a CDMA HRPD communication system, receive the load notification message carrying congestion state information and congestion control information and sent by an MME in the LTE system through an eAN in the CDMA HRPD communication system, wherein the congestion state information indicates that the LTE system is overloaded, and the congestion control information indicates that it is stopped to send the message to the LTE system or that the message of the specific priority is sent to the LTE system; or,
when the another wireless communication system is a CDMA HRPD communication system and the wireless communication system is an LTE system, receive the load notification message carrying congestion state information and congestion control information and sent by an eAN in the CDMA HRPD communication system through an MME in the LTE system, wherein the congestion state information indicates that the CDMA HRPD communication system is overloaded, and the congestion control information indicates that it is stopped to send the message to the CDMA HRPD communication system or that the message of the specific priority is sent to the CDMA HRPD communication system.

Further, the wireless communication system may further include:
a notification message processing module 73, configured to, when the another wireless communication system is an LTE system and the communication system is a wireless communication system based on a circuit domain, send a notification message to another network entity in the wireless communication system based on the circuit domain through a network interoperation entity in the wireless communication system based on the circuit domain, to inform processing operation after the network interoperation entity receives the load notification message to the another network entity; or, when the another wireless communication system is an LTE system and the communication system is a wireless communication system based on a packet domain, send a notification message to another network entity in the wireless communication system based on the packet domain through an eAN in the wireless communication system based on the packet domain, to inform processing operation after the eAN receives the load notification message to the another network entity.

Specific load control processes performed by the first communication system and the second communication system are similar to the aforementioned method embodiments, and are not described redundantly herein.

In addition, the terms "system" and "network" are always used interchangeably herein. The term "and/or" herein merely describes association relations between associated objects, and expresses three relations, for example, A and/or B may express three conditions, namely A exists separately, A and B exist simultaneously and B exists separately. In addition, the character "/" herein generally expresses a relation of "or" between the front and back associated objects.

In conclusion, according to the embodiments of the present invention, the first communication system sends the load notification message to the second communication system, so that when the first communication system is overloaded, the second communication system stops sending the message to the first communication system or sends the message of the specific priority and/or the specific type to the first communication system according to the indication information in the load notification message. Thus, messages sent to the first communication system are decreased, the load of the first communication system is reduced and the robustness of the first communication system is enhanced. According to the embodiments of the present invention, when the load of the LTE system is very heavy, the LTE system actively informs the 1xCS IWS the load state of the LTE network, and requests the 1xCS IWS to stop or decrease the message sent to the LTE system, so as to reduce the load of the LTE system. When the load of the 1x system is heavy, the 1x system may inform the LTE system the load information of the 1x system, so that the LTE system stops or decreases the information sent to the 1x system.

According to the embodiments of the present invention, under the congestion condition, the congestion processing of the 1x message is executed in the 1x CS IWS (not congested), so that the load of the LTE system is not increased, and the robustness of the LTE system is enhanced. The LTE system may still selectively process the 1x message under congestion, thus ensuring smooth operation of the service. Because the congestion control is based on a network element granularity, the MME does not need to additionally process 1x messages of all the UEs, thus the processing complexity of the MME is reduced.

It should be clearly appreciated for those skilled in the art that, for the purpose of convenience and briefness in description, only the division of the above-mentioned functional modules is taken as an example for illustration. In practical application, the above-mentioned functions may be completed by different functional modules according to needs, that is, the internal structure of the device is divided into different functional modules to complete all of or part of the above-described functions. For the specific working processes of the above-described systems, devices and units, reference could be made to the corresponding processes in the aforementioned method embodiments, and are not described redundantly herein.

In the several embodiments provided in the present application, it should be understood that the disclosed systems, devices and methods may be realized in other manners. For example, the embodiments of the above-described devices are only exemplary, for example, the division of the modules or units is only a logic function division, other division manners may be adopted in practice, e.g., a plurality of units or components may be combined or integrated in another system, or some features may be omitted or are not executed. From another point of view, the displayed or discussed mutual coupling or direct coupling or communication connection may be indirect coupling or communication connection of devices or units through some interfaces, and may be in electrical, mechanical or other forms.

The units illustrated as separate components may be or may not be physically separated, and the components displayed as units may be or may not be physical units, that is to say, the components may be positioned at one place or may also be distributed on a plurality of network units. The objectives of the solutions of the embodiments may be fulfilled by selecting part of or all of the units according to actual needs.

In addition, in various embodiments of the present invention, the functional units may be integrated in one processing unit, or may separately and physically exist, or two or more of the functional units may be integrated in one unit. The above-mentioned integrated units may be implemented in the form of hardware or software functional units.

When the integrated units are implemented in the form of software functional units and sold or used as independent products, the integrated units may be stored in a computer readable storage medium. Based on such an understanding, the technical solution of the present invention substantially, or the part of the present invention making contribution to the prior art, or all of or part of the technical solution may be embodied in the form of a software product, and the computer software product is stored in a storage medium, which includes a plurality of instructions enabling computer equipment (which may be a personal computer, a server, or network equipment and the like) or a processor to execute all of or part of the steps in the methods of the embodiments of the present invention. The aforementioned storage medium includes various kinds of medium that may store program codes, such as a U disk, a mobile hard disk, a read-only memory (ROM, Read-Only Memory), a random access memory (RAM, Random Access Memory), a magnetic disk, an optical disk, or the like.

The aforementioned embodiments are merely used for illustrating the technical solutions of the present invention, rather than limiting the present invention; though the present invention is illustrated in detail with reference to the aforementioned embodiments, it should be understood by those of ordinary skill in the art that modifications may still be made on the technical solutions disclosed in the aforementioned embodiments, or equivalent alterations may be made to a part of technical features thereof; and these modifications or alterations do not make the nature of the corresponding technical solutions depart from the spirit and scope of the technical solutions of the embodiments of the present invention.

## Claims

1. A load control method for a wireless communication system, comprising:
sending, by a first communication system, when a load of the first communication system is higher than a set threshold value, a first load notification message to a second communication system, so that the second communication system stops sending a message to the first communication system or only sends a message of a specific priority and/or a specific type to the first communication system according to indication information in the first load notification message.

2. The load control method for the wireless communication system of claim 1, wherein if the first communication system is a long term evolution (LTE) system and the second communication system is a wireless communication system based on a circuit domain, the sending, by the first communication system, when the load of the first communication system is higher than the set value, the first load notification message to the second communication system comprises:
sending, by a mobility management entity (MME) in the LTE system, when the load of the MME or an evolved universal terrestrial radio access network (E-UTRAN) or an air interface in the LTE system is greater than the set threshold value, the first load notification message carrying first congestion state information and first congestion control information to a network interoperation entity in the wireless communication system based on the circuit domain, wherein the first congestion state information is used for indicating that the LTE system is overloaded, and the first congestion control information is used for indicating that it is stopped to send the message to the LTE system or that only the message of the specific priority and/or the specific type is sent to the LTE system;
if the first communication system is a wireless communication system based on a circuit domain and the second communication system is an LTE system, the sending, by the first communication system, when the load of the first communication system is higher than the set value, the first load notification message to the second communication system comprises:
sending, by a network interoperation entity in the wireless communication system based on the circuit domain, when the load of the wireless communication system based on the circuit domain is greater than the set threshold value, the first load notification message carrying first congestion state information and first congestion control information to an MME in the LTE system, wherein the first congestion state information is used for indicating that the wireless communication system based on the circuit domain is overloaded, and the first congestion control information is used for indicating that it is stopped to send the message to the wireless communication system based on the circuit domain or that only the message of the specific priority and/or the specific type is sent to the wireless communication system based on the circuit domain.

3. The load control method for the wireless communication system of claim 1, wherein the first load notification message comprises an existing message defined on a communication interface between the first communication system and the second communication system or a message added on a communication interface between the first communication system and the second communication system.

4. The load control method for the wireless communication system of claim 2, wherein when the wireless communication system based on the circuit domain is a code division multiple access (CDMA) 2000, the first load notification message is an added A21-Overload Notification message or an extended A21-Event Notification message, an Event info cell parameter of the added A21-Overload Notification message or an A21 Event cell parameter of the extended A21-Event Notification message comprises an added additional event information field, and
the additional event information field is used for expressing that the first communication system is overloaded and it is stopped to send the message to the first communication system; or, used for expressing indication information that the first communication system is overloaded and only the message of the specific priority and/or the specific type is sent to the first communication system; or used for expressing that the first communication system is not overloaded by different values.

5. The load control method for the wireless communication system of claim 4, wherein the message of the specific type comprises a message related to a short message service (SMS) or a voice call or an emergency service or position registration, and the message of the specific priority comprises a message of which a priority value is higher than or equal to a set threshold.

6. The load control method for the wireless communication system of claim 5, wherein the priority comprises a priority of a user sending the message, or a priority of the message, or a priority of a call service or an SMS corresponding to the message.

7. The load control method for the wireless communication system of claim 1, wherein if the first communication system is an LTE system and the second communication system is a code division multiple access evolved high rate packet data (CDMA HRPD) communication system, the sending, by the first communication system, when the load of the first communication system is higher than the set value, the first load notification message to the second communication system comprises:
sending, by an MME in the LTE system, when the load of the MME or an E-UTRAN or an air interface in the LTE system is greater than the set threshold value, the first load notification message carrying first congestion state information and first congestion control information to an evolved access network (eAN) in the CDMA HRPD communication system, wherein the first congestion state information is used for indicating that the LTE system is overloaded, and the first congestion control information is used for indicating indication information that it is stopped to send the message to the LTE system or only the message of the specific priority and/or the specific type is sent to the LTE system;
if the first communication system is a CDMA HRPD communication system and the second communication system is an LTE system, the sending, by the first communication system, when the load of the first communication system is higher than the set value, the first load notification message to the second communication system comprises:
sending, by an eAN in the CDMA HRPD communication system, when the load of the CDMA HRPD communication system is greater than the set threshold value, the first load notification message carrying first congestion state information and first congestion control information to an MME in the LTE system, wherein the first congestion state information is used for indicating that the CDMA HRPD system is overload, and the first congestion control information is used for indicating indication information that it is stopped to send the message to the CDMA HRPD communication system or the message of the specific priority is sent to the CDMA HRPD communication system.

8. The load control method for the wireless communication system of any one of claims 1 to 7, further comprising:
sending, by the first communication system, when the load of the first communication system is lower than the set threshold value, a second load notification message carrying second congestion state information and second congestion control information to a network interoperation entity in the second communication system, wherein the second congestion state information is used for indicating that overload of the first communication system is back to normal, and the second congestion control information indicates that the message is normally sent to the first communication system, so that the second communication system normally sends the message to the first communication system according to the second load notification message.

9. A load control method for a wireless communication system, comprising:
receiving, by a second communication system, a load notification message sent by a first communication system, wherein the load notification message is sent when a load of the first communication system is higher than a set threshold value;
stopping sending, by the second communication system, a message to the first communication system, or only sending a message of a specific priority and/or a specific type to the first communication system, according to indication information in the load notification message.

10. The load control method for the wireless communication system of claim 9, wherein if the first communication system is a long term evolution (LTE) system and the second communication system is a wireless communication system based on a circuit domain, the receiving, by the second communication system, the load notification message sent by the first communication system comprises:
receiving, by a network interoperation entity in the wireless communication system based on the circuit domain, the load notification message carrying congestion state information and congestion control information and sent by a mobility management entity (MME) in the LTE system, wherein the congestion state information indicates that the LTE system is overloaded, and the congestion control information indicates that it is stopped to send the message to the LTE system or that the message of the specific priority and/or the specific type is sent to the LTE system;
if the first communication system is a wireless communication system based on a circuit domain and the second communication system is an LTE system, the receiving, by the second communication system, the load notification message sent by the first communication system comprises:
receiving, by an MME in the LTE system, the load notification message carrying congestion state information and congestion control information and sent by a network interoperation entity in the wireless communication system based on the circuit domain, wherein the congestion state information is used for indicating that the wireless communication system based on the circuit domain is overloaded, and the congestion control information is used for indicating that it is stopped to send the message to the wireless communication system based on the circuit domain or that only the message of the specific priority and/or the specific type is sent to the wireless communication system based on the circuit domain.

11. The load control method for the wireless communication system of claim 10, wherein the stopping sending, by the second communication system, the message to the first communication system, or only sending the message of the specific priority and/or the specific type to the first communication system, according to the indication information in the load notification message, comprises:
when the wireless communication system based on the circuit domain is a code division multiple access (CDMA) 2000, the load notification message being an added A21-Overload Notification message or an extended A21-Event Notification message and an Event info cell parameter of the added A21-Overload Notification message or an A21 Event cell parameter of the extended A21-Event Notification message comprising an added additional event information field;
determining, by the second communication system, according to different values of the additional event information field, that the first communication system is overloaded, and stopping sending the message to the first communication system;
or,
determining that the first communication system is overloaded, and only sending the message of the specific priority and/or the specific type to the first communication system;
or,
determining that the first communication system is not overloaded, and normally sending the message to the first communication system.

12. The load control method for the wireless communication system of claim 9, wherein if the first communication system is an LTE system and the second communication system is a code division multiple access evolved high rate packet data (CDMA HRPD) communication system, the receiving, by the second communication system, the load notification message sent by the first communication system comprises:
receiving, by an evolved access network (eAN) in the CDMA HRPD communication system, the load notification message carrying congestion state information and congestion control information and sent by an MME in the LTE system, wherein the congestion state information indicates that the LTE system is overloaded, and the congestion control information indicates that it is stopped to send the message to the LTE system or that the message of the specific priority is sent to the LTE system;
if the first communication system is a CDMA HRPD communication system and the second communication system is an LTE system, the receiving, by the second communication system, the load notification message sent by the first communication system comprises:
receiving, by an MME in the LTE system, the load notification message carrying congestion state information and congestion control information and sent by an eAN in the CDMA HRPD communication system, wherein the congestion state information indicates that the CDMA HRPD system is overload, and the congestion control information indicates that it is stopped to send the message to the CDMA HRPD system or that the message of the specific priority is sent to the CDMA HRPD system.

13. The load control method for the wireless communication system of claim 11 or 12, further comprising:
sending, by a network interoperation entity in a wireless communication system based on a circuit domain, if the first communication system is an LTE system and the second communication system is the wireless communication system based on the circuit domain, a notification message to another network entity in the wireless communication system based on the circuit domain, to inform processing operation after the network interoperation entity receives the load notification message to the another network entity;
or, sending, by an eAN in a wireless communication system based on a packet domain, if the first communication system is an LTE system and the second communication system is the wireless communication system based on the packet domain, a notification message to another network entity in the wireless communication system based on the packet domain, to inform processing operation after the eAN receives the load notification message to the another network entity.

14. A wireless communication system, comprising:
a load notification message constructing module, configured to construct a first load notification message when a load of the communication system is higher than a set threshold value, wherein the load notification message carries indication information that it is stopped to send a message to the communication system or only a message of a specific priority and/or a specific type is sent to the communication system;
a load notification message sending module, configured to send the first load notification message to another communication system, so that the another communication system stops sending the message to the communication system or only sends the message of the specific priority and/or the specific type to the communication system according to the indication information in the load notification message.

15. The wireless communication system of claim 14, wherein if the communication system is a long term evolution (LTE) system and the another communication system is a wireless communication system based on a circuit domain, the load notification message constructing module is further configured to construct the first load notification message carrying first congestion state information and first congestion control information when the load of a mobility management entity (MME) or an evolved universal terrestrial radio access network (E-UTRAN) or an air interface in the LTE system is greater than the set threshold value, wherein the first congestion state information is used for indicating that the LTE system is overloaded, and the first congestion control information is used for indicating that it is stopped to send the message to the LTE system or that only the message of the specific priority is sent to the LTE system.

16. The wireless communication system of claim 14, wherein the load notification message constructing module is further configured to construct a second load notification message carrying second congestion state information and second congestion control information when the load of the LTE system is back to normal, wherein the second congestion state information indicates that the load of the LTE system is back to normal, and the second congestion control information indicates that the message is normally sent to the LTE system.

17. The wireless communication system of claim 16, wherein the load notification message sending module is further configured to send the second load notification message to a network interoperation entity in the wireless communication system based on the circuit domain through the MME in the LTE system.

18. The wireless communication system of claim 14, wherein if the wireless communication system is a wireless communication system based on a circuit domain and the another wireless communication system is an LTE system, the load notification message constructing module is further configured to construct the first load notification message carrying first congestion state information and first congestion control information when the load of the wireless communication system based on the circuit domain is greater than the set threshold value, wherein the first congestion state information indicates that the wireless communication system based on the circuit domain is overloaded, and the first congestion control information indicates that it is stopped to send the message to the wireless communication system based on the circuit domain or that the message of the specific priority is sent to the wireless communication system based on the circuit domain.

19. The wireless communication system of claim 18, wherein the load notification message constructing module is further configured to construct a second load notification message carrying second congestion state information and second congestion control information when the load of the wireless communication system based on the circuit domain is back to normal, wherein the second congestion state information indicates that the load of the wireless communication system based on the circuit domain is back to normal, and the second congestion control information indicates that the message is normally sent to the wireless communication system based on the circuit domain.

20. The wireless communication system of claim 19, wherein the load notification message sending module is further configured to send the second load notification message to an MME in the LTE system through a network interoperation entity in the wireless communication system based on the circuit domain.

21. The wireless communication system of any one of claims 15, 16 and 18, wherein the load notification message constructing module further configured to add an additional event information field in an Event info cell parameter of an added A21-Overload Notification message or in an A21 Event cell parameter of an extended A21-Event Notification message when the wireless communication system based on the circuit domain is a code division multiple access (CDMA) 2000 and the first load notification message is the added A21-Overload Notification message or the extended A21-Event Notification message; and
by different values of the additional event information field, express that the wireless communication system is overloaded and it is stopped to send the message to the wireless communication system; or, indication information that the wireless communication system is overloaded and the message of the specific priority and/or the specific type is sent to the wireless communication system; or, that the wireless communication system is not overloaded.

22. The wireless communication system of claim 14, wherein if the wireless communication system is an LTE system and the another wireless communication system is a code division multiple access evolved high rate packet data (CDMA HRPD) communication system, the load notification message constructing module is further configured to construct a load notification message carrying congestion state information and congestion control information when the load of an MME or an E-UTRAN or an air interface in the LTE system is greater than the set threshold value, wherein the congestion state information indicates that the LTE system is overloaded, and the congestion control information indicates that it is stopped to send the message to the LTE system or that the message of the specific priority is sent to the LTE system;
or,
if the wireless communication system is a CDMA HRPD communication system and the another wireless communication system is an LTE system, the load notification message constructing module is further configured to construct a load notification message carrying congestion state information and congestion control information when the load of the CDMA HRPD communication system is greater than the set threshold value, wherein the congestion state information indicates that the CDMA HRPD communication system is overloaded, and the congestion control information indicates that it is stopped to send the message to the CDMA HRPD communication system or that the message of the specific priority is sent to the CDMA HRPD communication system.

23. A wireless communication system, comprising:
a load notification message receiving module, configured to receive a load notification message sent by another wireless communication system, wherein the load notification message is sent when a load of the another communication system is higher than a set threshold value;
a message sending control processing module, configured to stop sending a message to the another communication system or send a message of a specific priority and/or a specific type to the another communication system according to indication information in the load notification message received by the load notification message receiving module.

24. The wireless communication system of claim 23, wherein the load notification message receiving module is further configured to, when the another wireless communication system is a long term evolution (LTE) system and the communication system is a wireless communication system based on a circuit domain, receive the load notification message carrying congestion state information and congestion control information and sent by a mobility management entity (MME) in the LTE system through a network interoperation entity in the wireless communication system based on the circuit domain, wherein the congestion state information indicates that the LTE system is overloaded, and the congestion control information indicates that it is stopped to send the message to the LTE system or that the message of the specific priority is sent to the LTE system; or, the congestion state information indicates that the load of the LTE system is back to normal, and the congestion control information indicates that the message is normally sent to the LTE system;
or,
when the another wireless communication system is a wireless communication system based on a circuit domain and the second communication system is an LTE system, receive the load notification message carrying congestion state information and congestion control information and sent by a network interoperation entity in the wireless communication system based on the circuit domain through an MME in the LTE system, wherein the congestion state information indicates that the wireless communication system based on the circuit domain is overloaded, and the congestion control information indicates that it is stopped to send the message to the wireless communication system based on the circuit domain or that the message of the specific priority is sent to the wireless communication system based on the circuit domain; or, the congestion state information indicates that the load of the wireless communication system based on the circuit domain is back to normal, and the congestion control information indicates that the message is normally sent to the wireless communication system based on the circuit domain.

25. The wireless communication system of claim 24, wherein the message sending control processing module is further configured to, when the wireless communication system based on the circuit domain is a code division multiple access (CDMA) 2000, the load notification message is an added A21-Overload Notification message or an extended A21-Event Notification message and an additional event information field is added in an Event info cell parameter of the added A21-Overload Notification message or in an A21 Event cell parameter of the extended A21- Event Notification message,
according to different values of the additional event information field, determine that the another wireless communication system is overloaded, and stop sending the message to the another wireless communication system;
or,
determine that the another wireless communication system is overloaded, and send indication information of the message of the specific priority and/or the specific type to the another wireless communication system;
or,
determine that the another wireless communication system is not overloaded, and normally send the message to the another wireless communication system.

26. The wireless communication system of claim 23, wherein the message sending control processing module is further configured to, when the another wireless communication system is an LTE system and the communication system is a code division multiple access evolved high rate packet data (CDMA HRPD) communication system, receive the load notification message carrying congestion state information and congestion control information and sent by an MME in the LTE system through an evolved access network (eAN) in the CDMA HRPD communication system, wherein the congestion state information indicates that the LTE system is overloaded, and the congestion control information indicates that it is stopped to send the message to the LTE system or that the message of the specific priority is sent to the LTE system;
or,
when the another wireless communication system is a CDMA HRPD communication system and the wireless communication system is an LTE system, receive the load notification message carrying congestion state information and congestion control information and sent by an eAN in the CDMA HRPD communication system through an MME in the LTE system, wherein the congestion state information indicates that the CDMA HRPD communication system is overloaded, and the congestion control information indicates that it is stopped to send the message to the CDMA HRPD communication system or that the message of the specific priority is sent to the CDMA HRPD communication system.

27. The wireless communication system of claim 25 or 26, further comprising:
a notification message processing module, configured to, when the another wireless communication system is an LTE system and the communication system is a wireless communication system based on a circuit domain, send a notification message to another network entity in the wireless communication system based on the circuit domain through a network interoperation entity in the wireless communication system based on the circuit domain, to inform processing operation after the network interoperation entity receives the load notification message to the another network entity; or, when the another wireless communication system is an LTE system and the communication system is a wireless communication system based on a packet domain, send a notification message to another network entity in the wireless communication system based on the packet domain through an eAN in the wireless communication system based on the packet domain, to inform processing operation after the eAN receives the load notification message to the another network entity.
